# EUROPÄISCHE PATENTSCHRIFT

(11) **EP 0 831 667 B1**
(45) Veröffentlichungstag und Bekanntmachung des Hinweises auf die Patenterteilung: **29.05.2002**
(21) Anmeldenummer: 97810650.8
(22) Anmeldetag: 15.09.1997
(51) Int. Cl.: H04Q 7/32

(54) **Verbindungseinrichtung mit einer Telefoniereinrichtung**
Connection system with telephone device
Système de connexion avec dispositif téléphonique

(30) Priorität: 13.09.1996 CH 225196; 19.09.1996 CH 229796
(43) Veröffentlichungstag der Anmeldung: 25.03.1998
(73) Patentinhaber: Peiker, Andreas, 61381 Friedrichsdorf/Ts (DE)
(72) Erfinder: Peiker, Andreas, 61381 Friedrichsdorf /Ts (DE)
(74) Vertreter: Roshardt, Werner Alfred, Dipl.-Phys.

(56) Entgegenhaltungen:
- EP-A- 0 354 367
- GB-A- 2 270 405
- US-A- 4 821 309
- US-A- 5 276 728

## Beschreibung

Die Erfindung betrifft eine Verbindungseinrichtung gemäß Patentanspruch 1.

### Stand der Technik

In der britischen Patentanmeldung GB-A 2 270 405 ist eine in einem Fahrzeug fest eingebaute Fahrzeugsendestation beschrieben, welche mit einem sogenannten G.P.S. (Global Positioning System) zusammenarbeitete. Wurde der Fahrzeugsendestation ein Alarmsignal funktechnisch übermittelt, so stellte diese via G.P.S. ihre augenblickliche Ortsposition fest und übermittelte diese. Nach einer vorgegebenen Zeitdauer wurde eine weitere Ortsbestimmung vorgenommen. Unterschieden sich die Daten dieser beiden Ortsbestimmungen wurde davon ausgegangen, dass das Fahrzeug gestohlen worden war. Es wurden laufend weitere Ortbestimmungen vorgenommen bis diese über einen "Reset"-Befehl gestoppt wurden. Im US-Patent US-A 4 821 309 ist ein Autotelefon beschrieben, welches mit peripheren Mess- und Informationsdatengebern zusammen arbeitete. Der Sprechhörer des Autotelefons war mit einer Basiseinheit (BSU) verbunden und in dieser halterbar. Die Basiseinheit hatte einen elektrischen Ein-/Ausschalter, einen Bildschirm, einen Schalter für die Einstellung des Rufsignals sowie die Lautstärke im Handapparat. Das bekannte Autotelefon hatte eine Basisstation, einen Antennenanschluss mit Antenne und einen mit der Basisstation verbundenen Handapparat. Die fernmeldetechnische Intelligenz des Autotelefons saß in der Basisstation. Basistation, Sprechhörer, Antennenanschluss und Antenne bilden eine fest im Fahrzeug installierte jedoch nicht betriebsbereit entnehmbare Einheit. Ferner waren bei der US-A 4 821 309 sowohl an der fest eingebauten Basisstation wie auch auf der Rückseite des Sprechhörers Funktionstasten angebracht.

Im US-Patent US-A 5 276 728 ist ein weiteres Autotelefon beschrieben, welches mit diversen Sensoren in einem Fahrzeug zusammenarbeiten konnte bzw. durch Anruf eine derartige Steuerung erfolgen konnte, dass ein gestohlenes Fahrzeug lahm gelegt werden kann.

Bei den in der US-A 4 821 309, der GB-A 2 270 405 und der US-A 5 276 728 beschriebenen Verbindungseinrichtungen handelt es sich um jeweils ein Autotelefon. Die Erfindung hingen verwendet ein Handfunktelefon (Handy), welches z. B. aufgrund seiner freien Beweglichkeit einen völlig anderen Aufbau und eine neue Funktionsweise gegenüber einem fest eingebauten Autotelefon hat.

### Aufgabe der Erfindung

Aufgabe der Erfindung ist es, eine Verbindungseinrichtung zu schaffen, bei der eine Telefoniereinrichtung nicht nur nachrichtentechnischen Zwecken dient, sondern mit peripheren Einrichtungen kommunizieren kann.

### Lösung der Aufgabe

Die Aufgabe wird erfindungsgemäß durch die Merkmale des Patentanspruchs 1 gelöst.

Erfindungsgemäß ist die eine Teilnehmerwahleinrichtung, eine Sprech- und Hörkapsel aufweisende Telefoniereinrichtung nicht direkt mit dem nachrichtentechnischen Netz zu anderen potentiellen Gesprächsteilnehmern verbunden; es ist eine Steuereinrichtung zwischengeschaltet. Mit dieser Steuereinrichtung wirken nun periphere Meß- und/oder Informationsdatengeber zusammen, um bevorzugt aufgrund der Geberdaten vorgegebene Verbindungswege für die Telefoniereinrichtung anzuwählen sowie deren Daten zu übermitteln.

Auch können in einer Ausführungsvariante Geberdaten oder nachrichtentechnisch übermittelte Daten auf einer Bildwiedergabeeinrichtung der Telefoniereinrichtung dargestellt werden. Die bildliche Darstellung kann auch auf Bildschirmen vorgenommen werden, die in einer ein Handfunktelefon aufnehmenden Handschale oder in einer Konsole zum Anschluß der Telefoniereinrichtung eingebaut sind. Auch kann eine separate ("stand alone") Bildwiedergabeeinrichtung vorhanden sein.

Bevorzugt wird man die erfindungsgemäße Verbindungseinrichtung in einem Fahrzeug (Kraftfahrzeug, Omnibus, Eisenbahn, Schiff, ...) einsetzen; sie kann aber auch ortsfest (Hotel, Konferenzraum, öffentliche Gebäude, ...) eingesetzt werden.

In einer weiteren Ausführungsvariante weist die Telefoniereinrichtung illuminierte Wähltastenfelder auf, welche bevorzugt von der Steuereinrichtung je nach eingehender Dateninformation auf eine andere Illuminationsfarbe bevorzugt auf einzelne Tasten oder Tastengruppen geschaltet werden. So kann beispielsweise bei Notrufinformationen auf eine rote Farbe, welche man dann bevorzugt blinken läßt, geschaltet werden. Für allgemeine nachrichtentechnische Aufgaben wird man bevorzugt auf eine gelbe Farbe schalten. Ist z. B. die Telefoniereinrichtung auf "Freihören und -sprechen" geschaltet, kann man beispielsweise eine blaue Farbe wählen.

Weitere vorteilhafte Ausführungsbeispiele und Merkmalskombinationen ergeben sich aus der nachfolgenden Detailbeschreibung und der Gesamtheit der Patentansprüche.

Die zur Erläuterung der Ausführungsbeispiele verwendeten Zeichnungen zeigen in
- Fig. 1: ein Blockschaltbild der erfindungsgemäßen Verbindungseinrichtung und
- Fig. 2: eine perspektivische Darstellung einer beispielsweisen Telefoniereinrichtung der in **Figur 1** gezeigten Verbindungseinrichtung.

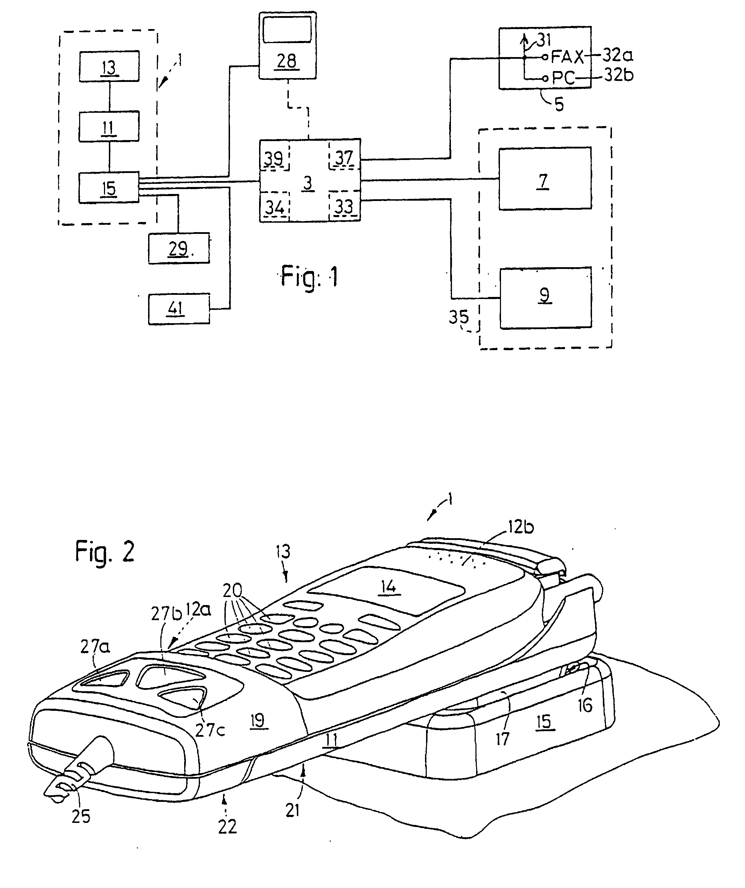

Die in einem Blockschaltschema in **Figur 1** dargestellte erfindungsgemäße Verbindungseinrichtung hat eine Telefoniereinrichtung **1** und eine Steuereinrichtung **3**, über die zusätzlich zu nachrichtentechnischen Einrichtungen **5** weitere periphere Meß- und/oder Informationsgeber **7** und **9** auf die Telefoniereinrichtung **1** einwirken.

Die Telefoniereinrichtung **1** hat ein aus einer Aufnahmeeinrichtung **11** herausnehmbares, eine Sprechkapsel **12a** und eine Hörmuschel **12b** aufweisendes Handfunktelefon **13** (Handy). Unterhalb der Hörkapselanordnung ist eine bildliche Anzeigeeinrichtung (Display) **14** angeordnet. Die Aufnahmeeinrichtung **11** ist als Handschale ausgebildet und ebenfalls abnehmbar in einer Konsole **15** gehalten. Aufnahmeeinrichtung **11** und Konsole **15** sind aus Kunststoff in einem Spritzgußverfahren hergestellt.

Die Verbindungseinrichtung ist hier beispielsweise in einem Kraftfahrzeug angeordnet. Die Konsole **15** ist annähernd quadratisch mit einer Innenmulde **16** ausgebildet. Die Befestigung der Konsole **15** am Armaturenbrett eines Kraftfahrzeugs, an dessen Seitenwand oder einer Seitenwand eines anderen Fahrzeugs (Eisenbahn, Omnibus, ...) erfolgt in der Regel mit Schrauben. Die Innenmulde **16** bildet das Gegenstück zu einem im oberen Teil der Aufnahmeeinrichtung **11** angeformten Hörkapselteil **17** mit einer Hörkapsel. Zur wegnehmbaren Halterung der Aufnahmeeinrichtung **11** an der Konsole **15** werden nicht dargestellte lösbare Verriegelungselemente verwendet.

Am unteren, in **Figur 2** linken Figurenbereich hat die Aufnahmeeinrichtung **11** ein aufklappbares, köcherartiges Einsteckteil **19.** Die Köchertiefe ist lediglich nur so groß gewählt, daß ein Halten des Handfunktelefons **13** möglich ist, jedoch dessen Wahltasten **20** einer Teilnehmerwahleinrichtung einwandfrei bedienbar bleiben. In der Rückwand **21** des Einsteckteils **19** ist ein Mikrofon **22** angeordnet. Die Hörkapsel im Hörkapselteil **17** und das Mikrofon **22** sind über einen nicht dargestellten Kontaktstift beim Einlegen des Handfunktelefons **13** in die Aufnahmeeinrichtung **11** aktivierbar.

Im Köcherboden sind Anschlußmittel als ein Interface **23** für die energetische und signalmäßige Ankopplung des Handfunktelefons **13** vorgesehen. Über ein Kabel **25** ist die Aufnahmeeinrichtung **11** ebenfalls energetisch und signalmäßig mit der Konsole **15** verbunden. (Das Kabel **25** kann auch an eine separate Anschlußstelle geführt werden, wobei dann die Konsole nur noch eine Haltefunktion hätte.)

Die Montage der Konsole **15** an einer Wand erfolgt derart, daß das Handfunktelefon **13** von oben in das Einsteckteil **19** einsteckbar ist. Die Wahltasten **20** sind beim eingesteckten Handfunktelefon **13** außen, damit deren Bedienung auch im eingesteckten Zustand möglich ist.

Auf der Vorderseite **26** des Einsteckteils **19** sind drei Funktionstasten **27a** bis **27c** derart angeordnet und ausgebildet, daß sie ohne Blickkontakt find- und betätigbar sind. Die Funktionstasten **27a** bis **27c** sind gegen Fehlbedienung geschützt angeordnet. Bevorzugt wird man sie deshalb versenkt anordnen. Die Tastenfunktionen der Funktionstasten **27a** bis **27c** unterscheiden sich von den Funktionen der Wahltasten **20** des Handfunktelefons **13**; sie können jedoch analog zu diesen auch eine Farbumschaltung haben. Im Gegensatz zu diesen haben sie keine den allgemeinen Fernsprechverkehr beeinflussende Funktion. Ihre Funktionen sind hier im Fahrzeug fahrzeugspezifisch ausgerichtet. Bei einer ortsfesten Verwendung der Verbindungseinrichtung sind die Tastenfunktionen dann auf den betreffenden Ort bezogen, wie beispielsweise dem eines Hotels zu dem eines Kellners, der Rezeption, ...

Die Aufnahmeeinrichtung **11** stellt den Übergang vom Handfunktelefon **13** zu speziellen Gegebenheiten des Fahrzeugs oder des Orts dar. Die Konsole **15** ist für die signalmäßige Anpassung zwischen der Telefoniereinrichtung **1** und der Steuereinrichtung **3** sowie für zusätzliche am Ort bzw. im Fahrzeug anzubringende Informationsgeber, insbesondere zusätzliche Bildschirmeinheiten **28** zuständig. D.h. sie wirkt bei der Datenaufbereitung für den Benützer mit. Ferner ist die Konsole **15** für die energiemäßige Versorgung **29** von Handfunktelefon **13**, Aufnahmeeinrichtung **11** sowie unten aufgeführter weiterer Informationsausgabegeräte zuständig. Zur energiemäßigen Versorgung zählen auch Einrichtung **29** zum Aufladen entsprechender Akkumulatore.

Die Bildschirmeinheit **28** kann nun, wie in **Figur 1** angedeutet ist, als separates Element ausgebildet sein. Sie kann jedoch auch in der Aufnahmeeinrichtung (beispielsweise unterhalb der Funktionstasten) oder am Handfunktelefon (zusätzlich zum Display **14** im Bereich der Hörkapsel **12b**) angeordnet sein.

Sofern die Verbindungseinrichtung in einem Fahrzeug eingesetzt ist, ist die Steuereinrichtung **3** nachrichtentechnisch mit einer Fahrzeugantenne **31** verbunden. Auch können Verbindungen **32a** und **32b** zu einem Faxgerät oder einem Computer [PC] vorhanden sein.

Nachfolgend wird der Einsatz der erfindungsgemäßen Verbindungseinrichtung in einem ortsbeweglichen Fahrzeug beschrieben. Neben den oben beispielsweise aufgeführten nachrichtentechnischen Einrichtungen ist die Steuereinrichtung **3** mit fahrzeugspezifischen Einrichtungen **35** verbunden. Als fahrzeugspezifische Einrichtungen **35** sind hier beispielsweise zu sehen:
- Satellitenpositioniereinrichtungen [GPS (Global Positioning System)],
- Fahrzeugdiagnoseeinrichtung,
- Einrichtungen betreffend das Fahrverhalten, wie Benzinabstellung, Abstellung der elektrischen Energieversorgung, Ent- und Verriegelung der Fahrzeugtüren,
- Überwachung der Airbagauslösung.

Die Steuereinrichtung **3** weist einen Rufnummernspeicher **33** und einen Rufnummernwähler **34** auf. In Abhängigkeit der über die Antenne **31** bzw. von den fahrzeugspezifischen Einrichtungen **35** abgegebenen bzw. von der Steuereinrichtung **3** abgefragten Meß- und/oder Informationsdaten wird aus dem Rufnummernspeicher **33** eine Rufnummer ausgewählt und mit dem Rufnummernwähler **34** selbsttätig die entsprechende Verbindung hergestellt.

Beispielsweise wird das oben aufgeführte Verfahren dann ausgeführt, wenn bei einem Unfall der Airbag ausgelöst worden ist. Die Einrichtung **35** stellt die Airbagauslösung fest; es muß sich somit ein Unfall ereignet haben. Hierauf sucht der Rufnummernwähler **34** aus dem Rufnummernspeicher **33** die Notfallnummer heraus und stellt die entsprechende nachrichtentechnische Verbindung her. Gleichzeitig ermittelt die Satellitenpositioniereinrichtung den Ort des Fahrzeugs und gibt diesen selbsttätig an die Notfallstation weiter. In einem nächsten Schritt wird die in der Konsole **15** eingebaute Hör- und Sprechmuschel auf Freihören und -sprechen umgeschaltet. (Es kann auch auf separate, sofern vorhanden, im Fahrzeug angeordnete Mikrofone und Lautsprecher für Freihören und -sprechen umgeschaltet werden) Eventuell verletzte Fahrzeuginsassen sind nun selbsttätig mit der Unfallstation akustisch verbunden.

Unabhängig von einer automatischen Herstellung einer Notrufverbindung über die beispielsweise Airbag-Auslösung kann die Notrufverbindung auch über Drücken einer entsprechenden Funktionstaste, beispielsweise der mittigen Funktionstaste **27b** erfolgen.

Neben einem Rufnummernspeicher **33** verfügt die Steuereinrichtung **3** über einen Speicher **37** für fahrzeugspezifische Betriebsdaten (gefahrene Kilometer, Geschwindigkeit in Abhängigkeit der Fahrzeit, Servicedaten, ...) sowie eine Einrichtung **39** zur Zugriffskontrolle auf diesen Speicherinhalt.

Über einen nachrichtentechnischen Anruf der im Fahrzeug installierten Verbindungseinrichtung und anschließender Anwahl eines Sicherheitscodes stellt die Einrichtung **37** fest, daß der Anrufer berechtigt ist, den Inhalt bzw. Inhaltsteile des Speichers **39** auszulesen. Je nach Ausgestaltung der Verbindungseinrichtung kann nun der Anrufer direkt auslesen oder der Fahrzeugführer muß über eine der Funktionstasten **27a** bis **27c** sein Einverständnis quittieren.

Auch kann vorgesehen werden, mittels eines Anrufs nach Identifizierung ein Fahrzeug zu entriegeln. Hierdurch kann das Fahrzeug ohne aufwendige Hilfestellung mechanischer Werkstätten wieder benützt werden, falls der Fahrzeugschlüssel im Innern des Fahrezugs vergessen wurde. Auch könnte völlig auf die Verwendung von Fahrzeugschlüsseln verzichtet werden, da das Fahrzeug über ein herausgenommenes Handfunktelefon oder jedes andere Telefongerät durch einen Anruf aufmachbar wäre. Die Sicherheit gegen unbefugtes Benützen ist durch einen Sicherheitscode gegeben.

Es kann auch über die Steuereinrichtung **3** und insbesondere die separate Bildschirmeinheit **28** eine Verkehrleitung des Fahrzeugs vorgenommen werden [Verkehrstelematik].

Bei der Entwendung eines Fahrzeugs, welches die oben beschriebene erfindungsgemäße Verbindungseinrichtung aufweist, kann nun auf Telefonanruf und nachfolgender Identifizierung die Ortskoordinate des Fahrzeugs ermittelt werden. Nach Ermittlung der Koordinaten kann dann durch die Steuereinrichtung entweder die Kraftstoffzuführung oder die Zündung unterbrochen werden; auch kann das Fahrzeug bis zum Eintreffen der Polizei selbsttäig verriegelt werden.

Bevorzugt wird man bei einem entwendeten Fahrzeug nicht an einem beliebigen Ort die Zündung oder die Kraftstoffzuführung unterbrechen, sondern dies erst nach einem Fahrzeugstillstand von mehr als ein bis zwei Minuten vornehmen. Man ist in diesem Fall sicher, daß sich das Fahrzeug nicht mehr im Verkehrfluß befindet und somit bei einem Stillstand auch keine anderen Verkehrsteilnehmer gefährdet werden. Nach dem Zwangsstillstand können dann die Ortskoordinaten festgestellt werden [GPS (Global Positioning System)].

In einer bevorzugten Ausführungsvariante ist das Handfunktelefon mit illuminierbaren Wahltasten ausgebildet, deren Illuminationsfarbe, Illuminationsdauer und Illuminationstastverhältnis bevorzugt von der Steuereinrichtung aufgrund von Meß- und Informationsdaten der peripheren Geber einstellbar ist. Hierdurch kann der Fahrzeuglenker je nach Auslegung an durchzuführende Servicearbeiten erinnert werden. Auch können hiermit Alarmmeldungen initiiert werden.

Im Gegensatz zum Einbau der erfindungsgemäßen Verbindungseinrichtung in Fahrzeugen kann auch ein ortsfester Einbau erfolgen.

Auch kann anstelle eines Handfunktelefons mit Aufnahmeeinrichtung und Konsole ein "multifunktioneller" Handapparat bevorzugt mit integriertem Bildanzeigeelement (Display) verwendet werden. Mit den Funktionstasten **27a** bis **27c** kann dann neben einer automatischen Umschaltung durch die Steuereinrichtung in Abhängigkeit von Meldungen peripherer Geräte auf unterschiedliche Funktionen umgeschaltet werden. Diese unterschiedlichen Funktionen wird man dann bevorzugt durch eine unterschiedliche Illumination der Wahltasten beim Handapparat sowie auch, sofern möglich, beim Handy anzeigen. Durch die Funktionsumschaltung wird das Handy bzw. der Handapparat von einem nachrichtentechnischen Gerät in ein "Funktionsterminal" umgeschaltet, was durch eine entsprechende Tastenillumination kenntlich gemacht ist. Anstatt einer unterschiedlichen Farbgebung können auch unterschiedliche Blinkzyklen verwendet werden.

Die einzelnen Schnittstellen zwischen Handfunktelefon, Aufnahmeeinrichtung Konsole und Steuereinrichtung müssen nicht in der oben aufgeführten Art gestaltet werden. Man wird sie zweckmäßigerweise derart gestalten, daß die einzelnen Baugruppen möglichst universell einsetzbar sind, und eine Individualisierung für den speziellen Einsatz der Verbindungseinrichtung entweder mit den Verbindungsstrecken oder nur mit einigen wenigen Baugruppen erfolgt.

Auch kann die Steuereinrichtung **3** mit einem Kreditkartenieser **41** verbunden sein oder einen in der Aufnahmeeinrichtung oder im Handfunktelefon anzubringen bzw. vorhandenen Kartenleser steuern. Auch kann das Handfunktelefon mit einer Schließeinrichtung in der Aufnahmeeinrichtung verriegelbar sein. Das Handfunktelefon wäre dann nur entnehmbar, wenn der Kartenleser von der Kredikarte einen Sicherheitsbetrag (Pfand) als Gegenwert für das Handfunktelefon abgebucht hätte. Dieser Betrag wird dann nach dem Einstecken des Handfunktelefons in die Aufnahmeeinrichtung und dessen Verriegelung wieder gutgeschrieben. Eine Telefoniergebührenverrechnung erfolgt mit den bisher üblichen Maßnahmen.

Der Kartenleser **41** ist bevorzugt zusätzlich zu dem im Handy vorhanden. D.h., es ist eine erste Karte für die normale nachrichtentechnische Verbindung zu anderen Teilnehmern notwendig [GSM-Betrieb (Global System for Mobile Communications)]. Die zweite in den Kartenleser **41** einzusteckende Karte (Chip-Karte, Karte mit Magnetstreifen, ...) kann nun aus einem internen Speicher abrufbare Steuerungsbefehle haben; sie kann aber auch als Speichermedium für Fahrzeugdaten dienen. Sie kann beispielsweise als "Fahrtenschreiber" fungieren, laufend Fahrzeugdaten derart aufnehmen und überschreiben, daß jeweils nur ein "letzter" Fahrzeugzustand gespeichert ist. Dieser "letzte" Fahrzeugzustand kann dann bei einem Unfall ausgewertet werden, um möglichst eindeutig die Schuldfrage abklären zu können.

## Patentansprüche

1. Verbindungseinrichtung mit einer Telefoniereinrichtung **(1)** und einer mit der Telefoniereinrichtung **(1)** verbundenen Steuereinrichtung **(3)**, wobei die Steureinrichtung **(3)** derart ausgebildet ist, daß zusätzlich zu nachrichtentechnischen Einrichtungen **(5)** weitere periphere Meß- und/oder Informationsdatengeber **(7,9)** auf die Telefoniereinrichtung **(1)** einwirken und/oder selbsttätig Daten oder Mitteilungen nach Maßgabe der Meß-und/oder Informationsdaten der Meß- und/oder Informationsdatengeber **(7,9)** per Funk übermittelt werden können, und die Telefoniereinrichtung **(11)** eine Aufnahmeeinrichtung sowie ein aus dieser entnehmbares, eine Sprechkapsel **(12a)**, eine Hörmuschel **(12b)** und eine Teilnehmerwahleinrichtung **(20)** aufweisendes Handfunktelefon (Handy) **(13)** hat und die Steuereinrichtung zwischen Telefoniereinrichtung und dem nachrichtentechnischen Netz zu anderen potentiellen Gesprächsteilnehmern zwischengeschaltet ist.

2. Verbindungseinrichtung nach Anspruch 1, **dadurch gekennzeichnet, dass** die Steuereinrichtung derart mit peripheren Mess- und/oder Informationsdatengebern zusammenwirkend ausgebildet ist, dass aufgrund der Geberdaten vorgegebene Verbindungswege für die Telefoniereinrichtung angewählt sowie deren Daten übermittelt werden können.

3. Verbindungseinrichtung nach Anspruch 1 oder 2, **dadurch gekennzeichnet, dass** die Aufnahmeeinrichtung **(11)** ein köcherartiges Einsteckteil **(19)** zum Halten des Handfunktelefons **(13)** hat und auf der Vorderseite des Einsteckteils **(19)** Funktionstasten **(27a-c)** angeordnet sind.

4. Verbindungseinrichtung nach Anspruch 3, **dadurch gekennzeichnet, dass** die Funktionstasten gegen Fehlbedienung geschützt, bevorzugt versenkt angeordnet sind und damit ohne Blickkontakt find- und betätigbar sind.

5. Verbindungseinrichtung nach einem der Ansprüche 1 bis 4, **dadurch gekennzeichnet, daß** die Telefoniereinrichtung **(1)** eine an einer Wand befestigbare Konsole **(15)** aufweist, über die sie energie- und signalmäßig mit der Steuereinrichtung **(3)** verbunden ist, wobei in der Konsole **(15)** eine Anpassung zwischen der Anschlußnorm der Telefoniereinrichtung **(1)** und der Steuereinrichtung **(3)** vorgenommen ist.

6. Verbindungseinrichtung nach einem der Ansprüche 1 bis 5, **gekennzeichnet durch** wenigstens ein bildliches Anzeigeelement **(14, 28)**, welches in dem Handfunktelefon **(13)**, der Aufnahmeeinrichtung **(11)** oder der Konsole **(15)** angeordnet oder als separates Bauteil **(28)** mit der Steuereinrichtung **(3)** verbunden ist.

7. Verbindungseinrichtung nach einem der Ansprüche 1 bis 6, **dadurch gekennzeichnet, daß** die Steuereinrichtung **(3)** wenigstens einen Rufnummernspeicher **(33)** und einen zur selbsttätigen Rufnummernwahl ansteuerbaren Rufnummernwähler **(34)** hat, der in Abhängigkeit der an die Steuereinrichtung **(3)** abgegebenen bzw. von ihr abgefragten Meß- und/oder Informationsdaten aus dem Rufnummernspeicher **(33)** die entsprechende Rufnummer auswählt und die hierzugehörende nachrichtentechnische Verbindung herstellt.

8. Verbindungseinrichtung nach Anspruch 7, **gekennzeichnet durch** eine mit der Steuereinrichtung **(3)** und dem Rufnummernspeicher **(33)** zusammenwirkende Ansteuereinrichtung, mit der wahlweise periphere Meß- und/oder Informationsdatengeber **(35)** zur nachrichtentechnischen Abgabe von Daten an einen, insbesondere berechtigten, Anrufer ansteuerbar sind.

9. Verbindungseinrichtung nach Anspruch 7 oder 8, **gekennzeichnet durch** mit der Steuereinrichtung **(3)** infolge eines nachrichtentechnischen Anrufs ansteuerbare Funktionseinrichtungen **(35)**, welche beispielsweise ein Fahrzeug stillsetzen.

10. Verbindungseinrichtung nach einem der Ansprüche 1 bis 9, eingebaut in einem Fahrzeug, **dadurch gekennzeichnet, daß** die Steuereinrichtung **(3)** einen Speicher **(37)** zur Abspeicherung aktueller fahrtspezifischer Daten hat und diese Daten nachrichtentechnisch übermittelbar sind.

11. Verbindungseinrichtung nach einem der Ansprüche 1 bis 10, **dadurch gekennzeichnet, daß** die Teilnehmerwahleinrichtung **(20)** illuminierbare Wähltasten aufweist, deren Illuminationsfarbe und/oder Illuminationsdauer und/oder Illuminationstastverhältnis durch ein Signal, insbesondere von der Steuereinrichtung **(3)**, bevorzugt aufgrund vorgegebener Meß- und/oder Informationsdaten der peripheren Geber **(7, 9)** einstellbar ist.

## Claims

1. A connection device with a telephone apparatus (1) and a control device (3) connected to the telephone apparatus (1), the control device (3) being designed such that in addition to telecommunications devices (5) further peripheral measuring and/or information data transmitters (7, 9) can act on the telephone apparatus (1) and/or data or messages can be communicated automatically by radio telegraphy according to the measuring and/or information data of the measuring and/or information data transmitters (7, 9), and the telephone apparatus (11) has a receiving means and a mobile telephone (mobile) (13) removable therefrom and comprising a mouthpiece (12a), an earpiece (12b) and a subscriber selection means (20), and the control device is inserted between the telephone apparatus and the telecommunications network to other potential partners.

2. A connection device according to claim 1, **characterised in that** the control device is arranged to co-operate with peripheral measuring and/or information data transmitters such that on the basis of the transmitter data predetermined communication paths can be selected for the telephone apparatus and their data can be communicated.

3. A connection device according to claim 1 or 2, **characterised in that** the receiving means (11) has a case-like plug-in part (19) for holding the mobile telephone (13) and function keys (27a-c) are arranged on the front of the plug-in part (19).

4. A connection device according to claim 3, **characterised in that** the function keys are protected against incorrect operation, are preferably recessed and are thus able to be located and actuated without visual contact.

5. A connection device according to one of claims 1 to 4, **characterised in that** the telephone apparatus (1) has a console (15) that can be attached to a wall and by way of which the telephone apparatus is connected to the control device (3) with regard to power and signals, adaptation between the connection standard of the telephone apparatus (1) and the control device (3) being carried out in the console (15).

6. A connection device according to one of claims 1 to 5, **characterised by** at least one pictorial display element (14, 28) which is arranged in the mobile telephone (13), the receiving means (11) or the console (15) or is connected to the control device (3) as a separate component (28).

7. A connection device according to one of claims 1 to 6, **characterised in that** the control device (3) has at least one call number memory (33) and a call number selector (34) that can be triggered for automatic call number selection and which, in response to the measuring and/or information data delivered to the control device (3) or extracted therefrom, selects the corresponding call number from the call number memory (33) and produces the relevant telecommunications connection.

8. A connection device according to claim 7, **characterised by** a triggering device, co-operating with the control device (3) and the call number memory (33), by means of which peripheral measuring and/or information data transmitters (35) are able to be triggered selectively for telecommunications delivery of data to a caller, especially an authorised caller.

9. A connection device according to claim 7 or 8, **characterised by** function devices (35) that are able to be triggered by means of the control device (3) as a result of a telecommunications call and which, for example, stop a vehicle.

10. A connection device according to one of claims 1 to 9, built into a vehicle, **characterised in that** the control device (3) has a memory (37) for storing current journey-specific data and these data are able to be communicated by telecommunications.

11. A connection device according to one of claims 1 to 10, **characterised in that** the subscriber selection means (20) has selection keys that can be illuminated and the colour and/or duration and/or pulse-duty factor of which illumination are adjustable by means of a signal, especially from the control device (3), preferably on the basis of predetermined measuring and/or information data of the peripheral transmitters (7, 9).

## Revendications

1. Dispositif de liaison comportant un appareil téléphonique (1) et un dispositif de commande (3) relié à l'appareil téléphonique (1), et dans lequel le dispositif de commande (3) est agencé de telle sorte qu'en plus de dispositifs techniques (5) de transmission d'informations, d'autres transmetteurs périphériques de données de mesure et/ou de données d'information (7, 9) agissent sur l'appareil téléphonique (1) et/ou des données ou des communications peuvent être transmises automatiquement par radio, en fonction des données de mesure et/ou des données d'information du transmetteur de données de mesure et/ou de données d'information (7, 9), et l'appareil téléphonique (1) possède un dispositif de réception ainsi qu'un radiotéléphone manuel (Handy) (13), qui peut être retiré du dispositif de réception et comporte une capsule (12a) de transmission de signaux vocaux, un écouteur (12b) et un dispositif (20) de sélection d'abonné et que le dispositif de commande est branché entre l'appareil téléphonique et le réseau technique de transmission d'information vers d'autres abonnés téléphoniques potentiels.

2. Dispositif de liaison selon la revendication 1, **caractérisé en ce que** le dispositif de commande est agencé de manière à coopérer avec des transmetteurs périphériques de données de mesure et/ou de données d'information de telle sorte que des voies de liaison prédéterminées sur la base des données du transmetteur peuvent être transmises d'une manière sélectionnée pour l'appareil téléphonique, ainsi que les données de cet appareil.

3. Dispositif de liaison selon la revendication 1 ou 2, **caractérisé en ce que** le dispositif de réception (11) comporte une partie enfichable en forme de carquois (19) servant à retenir le radiotéléphone manuel (13) et que des touches de fonction (27a-c) sont disponibles sur la face avant de la partie d'enfichage (19).

4. Dispositif de liaison selon la revendication 3, **caractérisé en ce que** les touches de fonction sont protégées vis-à-vis d'une commande erronée, sont disposées de préférence en renfoncement et par conséquent peuvent être détectées et actionnées sans contact visuel.

5. Dispositif de liaison selon l'une des revendications 1 à 4, **caractérisé en ce que** l'appareil téléphonique (1) comporte une console (15) pouvant être fixée à un mur et au moyen de laquelle elle est reliée du point de vue transfert d'énergie et de signaux, au dispositif de commande (30), une adaptation étant réalisée, dans la console (15), entre le raccord normalisé de l'appareil téléphonique (1) et le dispositif de commande (3).

6. Dispositif de liaison selon l'une des revendications 1 à 5, **caractérisé par** au moins un élément d'affichage imagé (14, 28), qui est disposé dans le radiotéléphone manuel (13), le dispositif de réception (11) ou la console (15), ou est relié en tant que composant séparé (28) au dispositif de commande (3).

7. Dispositif de liaison selon l'une des revendications 1 à 6, **caractérisé en ce que** le dispositif de commande (3) comporte au moins une mémoire (33) de numéros d'appel et un sélecteur (34) de numéro d'appel, pouvant être commandé pour la sélection automatique du numéro d'appel et qui sélectionne en fonction des données de mesure et/ou d'information, qui sont délivrées au dispositif de commande (3) ou sont interrogées par ce dernier, à partir de la mémoire (33) de numéros d'appel, le numéro d'appel correspondant et établit la liaison technique de transmission d'information, qui est associée à ce numéro.

8. Dispositif de liaison selon la revendication 7, **caractérisé par** un dispositif de commande qui coopère avec le dispositif de commande (3) et la mémoire (33) de numéros d'appel et avec lequel au choix des transmetteurs périphériques (35) de données de mesure et/ou de données d'information peuvent être commandés pour la délivrance, conformément à la technique de transmission d'information, de données à un appelant, notamment autorisé.

9. Dispositif de liaison selon la revendication 7 ou 8, **caractérisé par** des dispositifs de fonction (35) qui peuvent être commandés au moyen du dispositif de commande (3) sur la base d'un appel technique de transmission d'information et qui mettent par exemple à l'arrêt un véhicule.

10. Dispositif de liaison selon l'une des revendications 1 à 9, incorporé monté dans un véhicule, **caractérisé en ce que** le dispositif de commande (3) comporte une mémoire (37) servant à mémoriser des données actuelles spécifiques au déplacement et que ces données peuvent être transmises selon la technique de transmission d'information.

11. Dispositif de liaison selon l'une des revendications 9 et 10, **caractérisé en ce que** le dispositif (20) de sélection d'abonné comporte des touches de sélection pouvant être éclairées, dont la couleur d'éclairement et/ou la durée d'éclairement et/ou le taux d'impulsions d'éclairement sont réglables au moyen d'un signal, notamment par le dispositif de commande (3), de préférence sur la base de données prédéterminées de mesure et/ou d'information des transmetteurs périphériques (7, 9).
